# FASCICULE DE BREVET EUROPEEN

(11) **EP 1 190 558 B1**
(45) Date de publication et mention de la délivrance du brevet: **04.04.2007**
(21) Numéro de dépôt: 00949566.4
(22) Date de dépôt: 28.06.2000
(51) Int. Cl.: H04M 3/46

(54) **ADAPTATION DE LA SEQUENCE D'APPEL PAR ANALYSE DE L'HISTORIQUE DES SEQUENCES DE COMMUNICATION PRECEDENTES**
ANPASSUNG DER ANRUFSEQUENZ DURCH ANALYSE DER HISTORIE VORHERGEHENDER ANRUFSEQUENZEN
CALL SEQUENCE ADAPTATION BY ANALYSING THE HISTORY OF PREVIOUS COMMUNICATION SEQUENCES

(30) Priorité: 29.06.1999 FR 9908331
(43) Date de publication de la demande: 27.03.2002
(73) Titulaire: HIGHTEL INTERNATIONAL N.V., Curacao (AN)
(72) Inventeur: BOURGINE, Paul, F-75013 Paris (FR)
(74) Mandataire: Breese, Pierre
(86) Numéro de dépôt international: PCT/FR2000/001810
(87) Numéro de publication internationale: WO 2001/001659

(56) Documents cités:
- GB-A- 2 315 191

## Description

Le domaine de l'invention concerne les centres de téléphonie couplée à l'informatique.

La téléphonie et le transfert de données numériques deviennent convergents avec l'utilisation des normes de téléphonie numérique du type X25 et du protocole TCP/IP pour le transfert de données. Il est déjà possible de transférer des appels téléphoniques dans un réseau ouvert en utilisant le protocole TCP/IP.

Dans les réseaux fermés, on utilise des centres de téléphonie et d'informatique (CTI) dans lesquels on relie l'équipement téléphonique (PABX ou terminal) avec le système d'information de l'entreprise. L'objectif est d'échanger des informations entre ces deux environnements, afin de créer de nouvelles applications communes. Ainsi, avec le service d'identification de l'abonné présent sur Numéris et le Réseau téléphonique commuté (RTC), un fichier concernant la personne appelant peut être importé à partir d'une base de données et apparaître sur l'écran de l'ordinateur du destinataire, avant même que ce dernier ait répondu à l'appel.

Un simple micro-ordinateur équipé d'un modem et doté de fonctions de téléphonie et de répondeur-enregistreur représente déjà une véritable solution de CTI. Mais on pourrait ainsi être considérer comme un CTI élémentaire dans le cas d'envoi de simples télécopies à partir de numéros de fax répertoriés dans une base de données.

Les applications de CTI bureautique concernent la messagerie unifiée (fax, vocal, e-mail, pager), l'affichage d'informations concernant un client en fonction de son numéro de téléphone ou de son code personnel et la gestion des appels sur l'écran. Citons aussi l'ACD (Automatic Call Distribution), une technique de distribution automatique des appels qui permet la régulation des flux d'appels entrants placés dans les files d'attente. À l'heure actuelle, bon nombre d'entreprises et de travailleurs indépendants sont équipés de systèmes distincts de messagerie électronique, de messagerie vocale et de télécopie. Or un système de messagerie unifiée qui cumule tous ces services est plus avantageux. Un tel système permet d'écouter, de lire et de visualiser les trois types de messages à partir d'une plate-forme unique, et ce, dans l'ordre souhaité. De plus, le système peut être paramétré de manière à réceptionner les messages sous une forme donnée et de les transmettre sous une autre. Ainsi, à l'aide de la technologie de conversion texte-parole, les messages électroniques et les télécopies peuvent être convertis en messages vocaux accessibles depuis un téléphone fixe ou portable. L'utilisateur dispose d'un seul numéro de téléphone. À l'ordinateur, ensuite, de rechercher le correspondant et de lui envoyer le bon message adapté au bon terminal.

Le CTI accroît la productivité Grâce à l'évolution des technologies, une solution de CTI peut fonctionner sans central PABX, simplement sur un serveur doté de cartes vocales. Ce concept de « PCPABX » s'adresse à de petites structures de 20 à 50 postes au plus. Parmi ses avantages, le CTI favorise l'organisation au sein de l'entreprise. La circulation du papier est réduite au profit de transferts d'informations électroniques. Des outils permettent la reconnaissance et l'orientation de la personne appelant en fonction de scenarii prédéfinis, la montée automatique de la fiche de l'appelant, la personnalisation des messages d'attente et de messagerie en-dehors des horaires d'ouverture et la gestion du "workflow" pour l'ensemble des services de l'entreprise.

Les différents centre d'appels utilisant uhne messagerie unifiée se trouvent confrontés à un problème d'optimisation des appels. La recherche séquentielle d'un correspondant sur ses différents numéros peut s'avérer assez longue et fastidieuse si ce correspondant possède un grand nombre de numéros de téléphone, de numéros de télécopie ou d'adresses numériques.

Le but de l'invention est de résoudre cette difficulté en proposant une méthode permettant d'améliorer les méthodes de connexion et d'optimiser le nombre d'appels nécessaires pour joindre un correspondant.

On connaît également, par la demande de brevet GB-A-2315191, un méthode de transfert d'appel conforme au préambule de la revendication 1.

A cet effet l'invention concerne un procédé de gestion de transferts de données vers un destinataire spécifique selon la revendication 1.

Avantageusement, le traitement effectué sur les données mémorisées consiste en un processus d'apprentissage itératif, en particulier un réseau neuronal.

Dans une variante, le traitement effectué sur les données mémorisées consiste en un traitement statistique.

L'invention concerne également un dispositif comportant des moyens d'acheminements de communications téléphoniques et des moyens de transferts de données selon la revendication 7.

L'invention s'applique dans un environnement de gestion intégrée des instructions applicables à tout type de télécommunications, qu'il s'agisse de télécommunications de voix (téléphone fixe ou mobile, voix sur protocole IP), données (télécopie, télémessagerie, messagerie électronique, transfert de fichiers par modem), ou par la suite mixtes (vidéoconférence).

Les instructions de l'utilisateur (générales ou spécifiques, permanentes ou temporaires) peuvent être spécifiées en fonction des supports de télécommunications, des numéros d'appels, de l'identité ou de la localisation des correspondants, de la nature des messages, de l'heure et du lieu.

Une application de l'invention permet à l'utilisateur d'être joint en toutes circonstances par l'aboutement de ses correspondants ou par la transmission rapide et fiable, par tous les supports de télécommunications disponibles, de leurs messages. Elle permet également à l'utilisateur d'accélérer la recherche de ses correspondants (en vue d'aboutements voix ou de transmission de messages), et d'optimiser les coûts de télécommunications associés par le choix sélectif du réseau téléphonique utilisé en sortie (« Least Cost Routing »).

L'invention comporte des modes automatiques et semi-automatiques. Les modes automatiques portent sur les traitements (généralement des routages d'appels ou de messages) qui ne font intervenir aucune opératrice appartenant au centre d'appels. Les modes semi-automatiques font intervenir une opératrice et permettent l'exécution de fonctions supérieures (telles que l'interprétation des demandes des correspondants, la recherche ou la fourniture d'informations, la prise de rendez-vous, le filtrage interactif). Dans le cas des modes semi-automatiques, les automatismes de l'application visent à la productivité des opératrices, l'optimisation des coûts téléphoniques, et à la sécurisation des données.

Dans une séquence d'appels séquentiels des différentes adresses d'un correspondant, il est possible que le correspondant soit toujours joignable par la même adresse à un moment donné. Un exemple simple consiste à considérer qu'une personne sera sur son lieu de travail dans la journée et chez elle le reste du temps. Un appel séquentiel classique ne fera pas la différence entre ces différentes possibilités, sauf si un opérateur externe l'a préalablement prévu en spécifiant les conditions d'appel. Ceci devient vite fastidieux si l'on possède beaucoup de correspondant.

Afin de permettre une amélioration du nombre d'appels réussis, on mémorise chacun des paramètres d'un appel. Les paramètres les plus importants consistent en la date et l'heure de l'appel, l'adresse d'appel, l'échec ou la réussite de cet appel.

A partir de ces données il est possible d'effectuer un traitement spécifique permettant d'évaluer les habitudes du correspondants. Un réseau neuronal est l'outil le plus performant dans ce cas. Il permet par un apprentissage itératif, de modifier la séquence des appels effectués en fonction du temps. Ces séquences modifiées sont mémorisées dans une adresse virtuelle spécifique. Dans notre exemple, il essaiera le domicile de la personne à joindre avant le lieu de travail s'il est minuit. Dans une variante, il pourra informer l'appelant que le correspondant n'a jamais répondu à un appel après minuit et lui proposer de laisser un message pour le lendemain.

Des méthodes statistiques classiques comme l'analyse ne composantes principales peuvent également permettre d'aboutir à ces conclusions.

Le journal des appels étant accessible à tout moment, il est très avantageux de remettre à jour les informations concernant les adresses virtuelles à chaque appel, en effectuant le traitement des informations lorsque l'activité du système est plus faible.

L'invention n'est pas limitée aux centres d'appels ou aux messageries unifiées, elle s'applique à tout domaine dans lequel les séquences d'actions sont prédéfinies indépendamment du résultat de ces actions.

## Revendications

1. - Procédé de gestion de transferts de données vers un destinataire spécifique possédant au moins une adresse numérique de télécommunication comprenant :
- une étape de définition d'une adresse virtuelle du destinataire comportant des adresses numériques de télécommunication dudit destinataire,
- une étape de sollicitation séquentielle des différentes adresses numériques jusqu'à l'obtention d'une réponse positive établissant un canal de communication,
- une étape de transferts des données,
- une étape de mémorisation, à chaque échec et/ou à chaque succès d'établissement de communication, des paramètres de la communication, et
- une étape de traitement des paramètres mémorisées afin de définir, par apprentissage itératif, les paramètres optimaux d'établissement de communication, ladite étape de traitement comprenant une étape consistant à modifier une séquence ordonnée desdites adresses numériques,
**caractérisé par le fait que** :
- ladite adresse virtuelle comprend une pluralité de séquences ordonnées desdites adresses numérique en fonction du temps,
- ladite étape de sollicitation étant effectuée sur une desdites séquences, ladite une séquence étant prédéfinie avant la sollicitation séquentielle,
- lors de ladite étape consistant à modifier, la modification de ladite une séquence de sollicitations est effectuée en fonction du temps.

2. - Procédé de gestion de transferts de données selon la revendication 1 **caractérisé en ce que** le processus d'apprentissage itératif utilise un réseau neuronal.

3. - Procédé de gestion de transferts de données selon la revendication 1 **caractérisé en ce qu'**il comprend, en outre, une étape de choix sélectif d'un réseau téléphonique pour le transfert de données.

4. - Procédé de gestion de transferts de données selon la revendication 1 **caractérisé en ce qu'**il comprend une étape d'intervention d'une opératrice pour l'interprétation des demandes des correspondants, la recherche ou la fourniture d'informations, la prise de rendez-vous, le filtrage interactif.

5. - Procédé de gestion de transferts de données selon la revendication 1 **caractérisé en ce que** lesdits paramètres consistent en la date et l'heure de l'appel, l'adresse d'appel, l'échec ou la réussite de cet appel.

6. - Procédé de gestion de transferts de données selon la revendication 1 **caractérisé en ce que** ladite étape de traitement est réalisée lorsque l'activité du système est faible.

7. - Dispositif comportant:
- des moyens de mémorisation d'une adresse virtuelle d'un destinataire comportant des adresses numériques de télécommunications permettant de joindre le destinataire,
- des moyens d'appel séquentiel d'un destinataire à partir d'une séquence ordonnée de ses adresses numériques,
- des moyens d'acheminements de communications téléphoniques,
- des moyens de transferts de données,
- des moyens de mémorisation de l'historique des paramètres d'appel, à chaque échec et/ou succès des appels émis et/ou reçus par un destinataire,
- des moyens de modélisation des séquences optimales par apprentissage itératif, aptes à modifier ladite séquence ordonnée,
**caractérisé par le fait que :**
- ladite adresse virtuelle mémorisée comporte une pluralité de séquences ordonnées desdites adresses numériques en fonction du temps,
- la séquence utilisée par lesdits moyens d'appel séquentiel est une des séquences de ladite pluralité de séquences et est prédéfinie, et
- la modification de ladite une séquence ordonnée est en fonction du temps.

## Claims

1. Method of managing data transfers to a specific recipient having at least one digital telecommunications address comprising:
- a step of defining a virtual address of the recipient comprising digital telecommunications addresses of said recipient,
- a step of sequential requests for different digital addresses until a positive response establishing a communication channel is received,
- a data transfer step,
- a step of storing the communication parameters after each failure and/or success in establishing a communication link, and
- a step of processing the stored parameters in order to define, by iterative learning, the optimal parameters for establishing communication, said processing step comprising a step involving modifying an ordered sequence of said digital addresses,
**characterised in that**:
- said virtual address comprises a plurality of sequences of said digital addresses sorted by time,
- said request step is carried out on one of said sequences, said sequence being predefined before the sequential request,
- during said modification step, said request sequence is modified according to time.

2. Method of managing data transfers according to claim 1, **characterised in that** the iterative learning process uses a neural network.

3. Method of managing data transfers according to claim 1, **characterised in that** it also comprises a step of selective choice of a telephone network for the data transfer.

4. Method of managing data transfers according to claim 1, **characterised in that** it comprises a step of intervention by an operator in order to interpret questions of correspondents, search for or provision of data, appointment management, interactive filtering.

5. Method of managing data transfers according to claim 1, **characterised in that** said parameters consist of the time and date of the call, the address of the call, whether the call was successful or failed.

6. Method of managing data transfers according to claim 1, **characterised in that** said processing step is carried out when the system has low levels of activity.

7. Device comprising:
- means for storing a virtual address of a recipient comprising digital telecommunications addresses that makes it possible to contact the recipient,
- means for sequentially calling a recipient using an ordered list of its digital addresses,
- routing means for telephonic communications,
- data transfer means,
- means for storing the call parameter history, after each successful or failed call emitted or received by a recipient,
- means for modelling the optimal sequences by iterative learning, capable of modifying said ordered sequence,
**characterised in that**:
- said stored virtual address comprises a plurality of sequences of said digital addresses sorted by time,
- the sequence used by said sequential calling means is one of the sequences of said plurality of sequences and is predefined, and
- said ordered sequence is modified according to time.

## Patentansprüche

1. - Verfahren zum Management von Datentransfers an einen spezifischen Empfänger, der wenigstens eine digitale Adresse für die Telekommunikation hat, das folgende Schritte umfaßt:
- ein Schritt mit Bestimmung einer virtuellen Adresse des Empfängers, die digitale Adressen für die Telekommunikation des besagten Empfängers hat,
- ein Schritt mit sequentiellem Aufruf der verschiedenen digitalen Adressen bis zum Erhalt einer positiven Antwort mit Herstellung eines Kommunikationskanals,
- ein Schritt mit dem Datentransfer,
- ein Schritt mit Speicherung der Parameter der Verbindung bei jedem Fehlschlag und/oder Erfolg des Verbindungsaufbaus,
- ein Schritt mit Verarbeitung der gespeicherten Parameter zur Bestimmung der optimalen Parameter für den Verbindungsaufbau durch iteratives Lernen, wobei der besagte Verarbeitungsschritt einen Schritt umfaßt, der darin besteht, eine geordnete Folge der besagten digitalen Adressen zu verändern,
**dadurch gekennzeichnet, daß**:
- die besagte virtuelle Adresse mehrere geordnete Folgen der besagten digitalen Adressen je nach Zeit umfaßt,
- wobei der besagte Schritt mit dem Aufruf auf einer der besagten Folgen durchgeführt wird, wobei eine Folge vor dem sequentiellen Aufruf vorbestimmt ist,
- beim besagten Schritt, der in der Änderung besteht, die Veränderung der besagten einen Aufrufsequenz zeitabhängig erfolgt.

2. - Verfahren zum Management von Datentransfers nach Patentanspruch 1, **dadurch gekennzeichnet, daß** der iterative Lernprozeß ein neuronales Netz benutzt.

3. - Verfahren zum Management von Datentransfers nach Patentanspruch 1, **dadurch gekennzeichnet, daß** es ferner einen Schritt mit Auswahl eines Telefonnetzes für den Datentransfer umfaßt.

4. - Verfahren zum Management von Datentransfers nach Patentanspruch 1, **dadurch gekennzeichnet, daß** es einen Schritt mit Eingriff einer Bedienerin für die Auslegung der Anfragen der Teilnehmer, die Suche oder die Lieferung von Informationen, die Terminvereinbarung, das interaktive Filtern umfaßt.

5. - Verfahren zum Management von Datentransfers nach Patentanspruch 1, **dadurch gekennzeichnet, daß** die besagten Parameter aus dem Datum und der Uhrzeit des Anrufs, der Adresse des Anrufs, dem Fehlschlag oder dem Erfolg dieses Anrufs bestehen.

6. - Verfahren zum Management von Datentransfers nach Patentanspruch 1, **dadurch gekennzeichnet, daß** der besagte Schritt mit Verarbeitung durchgeführt wird, wenn das System nur geringen Verkehr aufweist.

7. - Vorrichtung, die folgendes umfaßt:
- Mittel zur Speicherung einer virtuellen Adresse eines Empfängers, die digitale Adressen für die Telekommunikation umfaßt, mit denen der Empfänger erreicht werden kann,
- Mittel für den sequentiellen Anruf eines Empfängers ausgehend von einer geordneten Folge seiner digitalen Adresse"
- Mittel zur Leitung von telefonischen Verbindungen,
- Mittel für den Datentransfer,
- Mittel für die Speicherung der Historie der Anrufparameter bei jedem Fehlschlag und/oder Erfolg der ausgehenden und/oder bei einem Empfänger eingehenden Anrufen,
- Mittel zur Modellisierung der optimalen Folgen durch iteratives Lernen, die die besagte geordnete Folge veränsern können,
**dadurch gekennzeichnet, daß**:
- die besagte gespeicherte virtuelle Adresse mehrere geordnete Folgen der besagten digitalen Adressen in Zeitabhängigkeit umfaßt,
- die von den besagten Mitteln für den sequentiellen Anruf benutzte Folge eine der Folgen der besagten mehreren Folgen und vorbestimmt ist,
- die Veränderung der besagten einen geordneten Folge zeitabhängig ist.
